(19) **Europäisches Patentamt / European Patent Office / Office européen des brevets**

(11) **EP 3 813 017 A1**

(12) # EUROPÄISCHE PATENTANMELDUNG

(43) Veröffentlichungstag:
**28.04.2021 Patentblatt 2021/17**

(51) Int Cl.:
**G06T 7/11** *(2017.01)*  **G06T 7/136** *(2017.01)*
**G06T 7/155** *(2017.01)*  **G06T 7/187** *(2017.01)*

(21) Anmeldenummer: **20202165.5**

(22) Anmeldetag: **16.10.2020**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **21.10.2019 EP 19204270**

(71) Anmelder: **Bayer AG**
**51373 Leverkusen (DE)**

(72) Erfinder:
• **Fois, Franco**
  **40789 Monheim (DE)**
• **Liao, Dr. Wei**
  **60438 Frankfurt am Main (DE)**
• **Rechsteiner, Daniel**
  **51107 Köln (DE)**

(74) Vertreter: **BIP Patents**
**c/o Bayer Intellectual Property GmbH**
**Alfred-Nobel-Straße 10**
**40789 Monheim am Rhein (DE)**

(54) **SEGMENTIERUNG DER HERZREGION IN CT-AUFNAHMEN**

(57) Die vorliegende Erfindung befasst sich mit der Analyse der Herzregion in CT-Aufnalimen. Gegenstände der Erfindung sind ein Verfahren, ein Computersystem und ein Computerprogrammprodukt zur Segmentierung der Herzregion in CT-Aufnahmen.

Fig. 2

EP 3 813 017 A1

**Beschreibung**

Die vorliegende Erfindung befasst sich mit der Analyse der Herzregion in CT-Aufnahmen. Gegenstände der Erfindung sind ein Verfahren, ein Computersystem und ein Computerprogrammprodukt zur Segmentierung der Herzregion in CT-Aufnahmen.

Computertomographie (CT) ist ein Röntgenverfahren, mit dem der menschliche Körper in Querschnittbildern (Schnittbildverfahren) dargestellt wird. Im Vergleich zu einer herkömmlichen Röntgenaufnahme, auf der üblicherweise nur grobe Strukturen und Knochen erkennbar sind, wird in CT-Aufnahmen auch Weichteilgewebe mit geringen Kontrastunterschieden detailliert erfasst. Eine Röntgenröhre erzeugt einen sogenannten Röntgenfächerstrahl, der den Körper durchdringt und innerhalb des Körpers durch die verschiedenen Strukturen, wie Organe und Knochen, unterschiedlich stark abgeschwächt wird. Die Empfangsdetektoren gegenüber dem Röntgenstrahler empfangen die unterschiedlich starken Signale und leiten sie an einen Computer weiter, der aus den empfangenen Daten Schichtbilder des Körpers zusammensetzt. Computertomografische Aufnahmen (CT-Aufnahmen) können in 2D oder auch in 3D betrachtet werden. Zur besseren Abgrenzbarkeit von Strukturen innerhalb des Körpers des Menschen (z.B. Gefäße) kann vor der Erzeugung von CT-Aufnahmen ein Kontrastmittel in eine Vene gespritzt werden.

Computertomografie ist in der Diagnostik von Herz- und Lungenerkrankungen eine häufig angewandte Methode. Insbesondere ist die Computertomografie eine wichtige Methode zur Erkennung chronisch thromboembolischer pulmonaler Hypertonie (CTEPH) bei einem Patienten. CTEPH ist eine Sonderform der pulmonalen Hypertonie (PH, Lungenhochdruck). Sie ist charakterisiert durch die Einschwemmung von Thromben in die Lungenarterien. Diese verstopfen und verengen die Gefäße.

Die CT-Aufnahmen von Menschen, die an CTEPH leiden, weisen charakteristische Merkmale auf. Es wäre wünschenswert, wenn die genannten charakteristischen Merkmale automatisiert aus CT-Aufnahmen abgeleitet werden können. Dazu bedarf es zunächst einer automatisierten Einteilung der in einer CT-Aufnahme dargestellten Herzregion in einzelne Segmente, insbesondere der Separierung der Pulmonalarterie und der Aorta von den Ventrikeln.

Diesem Problem widmet sich die vorliegende Erfindung.

Ein erster Gegenstand der vorliegenden Erfindung ist ein Verfahren umfassend die Schritte:

- Empfangen einer CT-Aufnahme einer Herzregion eines Menschen, wobei in der CT-Aufnahme ein rechter Ventrikel, ein linker Ventrikel und Blutgefäße umfassend eine Pulmonalarterie und eine Aorta mittels eines Kontrastmittel kontrastverstärkt dargestellt sind,

- Erzeugen eines Herzregion-Binärbildes aus der empfangenen CT-Aufnahme durch Anwenden eines Graustufenschwellenwertverfahrens,

- Erzeugen von zwei Bildern aus dem Herzregion-Binärbild, einem Grobstrukturbild durch Anwenden eines Objekthafigkeitsgrobfilters und einem Feinstrukturbild durch Anwenden eines Objekthaftigkeitsfeinfilters,

- Einpassen des Grobstrukturbildes in einen Atlas eines Herzes, wobei für den Atlas des Herzes Schnittflächen für Übergänge von Aorta und Pulmonalarterie zu den Ventrikeln definiert sind,

- Übertragen der Schnittflächen auf das Feinstrukturbild, Entfernen von Strukturen, die von den Ventrikeln herrühren und dabei Erzeugen eines Blutgefäß-Binärbildes,

- Übertragen der Schnittflächen auf das Herzregion-Binärbild, Entfernen von Strukturen, die von den Blutgefäßen herrühren und dabei Erzeugen eines Ventrikel-Binärbildes,

- Anzeigen des Blutgefäß-Binärbildes und/oder des Ventrikel-Binärbildes auf einem Bildschirm und/oder Ausgeben des Blutgefäß-Binärbildes und/oder des Ventrikel-Binärbildes auf einem Drucker und/oder Speichern des Blutgefäß-Binärbildes und/oder des Ventrikel-Binärbildes in einem Datenspeicher.

Ein weiterer Gegenstand der vorliegenden Erfindung ist ein Computersystem umfassend

- eine Empfangseinheit
- eine Steuer- und Recheneinheit, und
- eine Ausgabeeinheit

- wobei die Steuer- und Recheneinheit konfiguriert ist, die Empfangseinheit zu veranlassen, eine CT-Aufnahme einer Herzregion eines Menschen zu empfangen, wobei in der CT-Aufnahme ein rechter Ventrikel, ein linker Ventrikel und Blutgefäße umfassend eine Pulmonalarterie und eine Aorta mittels eines Kontrastmittel kontrastverstärkt dargestellt sind,

- wobei die Steuer- und Recheneinheit konfiguriert ist, aus der empfangenen CT-Aufnahme durch Anwenden eines Graustufenschwellenwertverfahrens ein Herzregion-Binärbild zu erzeugen,

- wobei die Steuer- und Recheneinheit konfiguriert ist, aus dem Herzregion-Binärbild zwei Bilder zu erzeugen, ein Grobstrukturbild durch Anwenden eines Objekthafigkeitsgrobfilters und ein Feinstrukturbild durch Anwenden eines Objekthaftigkeitsfeinfilters,

- wobei die Steuer- und Recheneinheit konfiguriert ist, das Grobstrukturbild in einen Atlas eines Herzes einzupassen, wobei für den Atlas des Herzes Schnittflächen für Übergänge von Aorta und Pulmonalarterie zu den Ventrikeln definiert sind,

- wobei die Steuer- und Recheneinheit konfiguriert ist, ein Blutgefäß-Binärbild dadurch zu erzeugen, dass die Schnittflächen auf das Feinstrukturbild übertragen werden und Strukturen in dem Feinstrukturbild entfernt werden, die von den Ventrikeln herrühren,

- wobei die Steuer- und Recheneinheit konfiguriert ist, ein Ventrikel-Binärbild dadurch zu erzeugen, dass die Schnittflächen auf das Herzregion-Binärbild übertragen werden und Strukturen in dem Herzregion-Binärbild entfernt werden, die von den Blutgefäßen herrühren,

- wobei die Steuer- und Recheneinheit konfiguriert ist, das Blutgefäß-Binärbild und/oder das Ventrikel-Binärbild auf einem Bildschirm anzuzeigen, auf einem Drucker auszugeben und/oder in einem Datenspeicher zu speichern.

Ein weiterer Gegenstand der vorliegenden Erfindung ist ein Computerprogrammprodukt umfassend einen Datenträger, auf dem ein Computerprogramm gespeichert ist, das in den Arbeitsspeicher eines Computersystems geladen werden kann und dort das Computersystem dazu veranlasst, folgende Schritte auszuführen:

- Empfangen einer CT-Aufnahme einer Herzregion eines Menschen, wobei in der CT-Aufnahme ein rechter Ventrikel, ein linker Ventrikel und Blutgefäße umfassend eine Pulmonalarterie und eine Aorta mittels eines Kontrastmittel kontrastverstärkt dargestellt sind,

- Erzeugen eines Herzregion-Binärbildes aus der empfangenen CT-Aufnahme durch Anwenden eines Graustufenschwellenwertverfahrens,

- Erzeugen eines Grobstrukturbildes aus dem Herzregion-Binärbild durch Anwenden eines Objekthafigkeitsgrobfilters,

- Erzeugen eines Feinstrukturbildes aus dem Herzregion-Binärbild durch Anwenden eines Objekthaftigkeitsfeinfilters,

- Einpassen des Grobstrukturbildes in einen Atlas eines Herzes, wobei für den Atlas des Herzes Schnittflächen für Übergänge von Aorta und Pulmonalarterie zu den Ventrikeln definiert sind,

- Erzeugen eines Blutgefäß-Binärbildes aus dem Feinstrukturbild durch Übertragen der Schnittflächen auf das Feinstrukturbild und Entfernen von Strukturen aus dem Feinstrukturbild, die von den Ventrikeln herrühren,

- Erzeugen eines Ventrikel-Binärbildes aus dem Herzregion-Binärbild durch Übertragen der Schnittflächen auf das Herzregion-Binärbild und Entfernen von Strukturen aus dem Herzregion-Binärbild, die von den Blutgefäßen herrühren,

- Anzeigen des Blutgefäß-Binärbildes und/oder des Ventrikel-Binärbildes auf einem Bildschirm und/oder Ausgeben des Blutgefäß-Binärbildes und/oder des Ventrikel-Binärbildes auf einem Drucker und/oder Speichern des Blutgefäß-Binärbildes und/oder des Ventrikel-Binärbildes in einem Datenspeicher.

Die Erfindung wird nachstehend näher erläutert, ohne zwischen den Erfindungsgegenständen (Verfahren, Computersystem, Computerprogrammprodukt) zu unterscheiden. Die nachfolgenden Erläuterungen sollen vielmehr für alle Erfindungsgegenstände in analoger Weise gelten, unabhängig davon, in welchem Kontext (Verfahren, Computersystem, Computerprogrammprodukt) sie erfolgen.

Wenn in der vorliegenden Beschreibung oder in den Patentansprüchen Schritte in einer Reihenfolge genannt werden, bedeutet dies nicht zwingend, dass die Erfindung auf die genannte Reihenfolge beschränkt ist. Vielmehr ist denkbar, dass die Schritte auch in einer anderen Reihenfolge oder auch parallel zueinander ausgeführt werden können; es sei denn, ein Schritt baut auf einem anderen Schritt auf, was zwingend erforderlich macht, dass der aufbauende Schritt nachfolgend ausgeführt wird (was im Einzelfall aber deutlich wird). Die genannten Reihenfolgen stellen damit bevorzugte Ausführungsformen der Erfindung dar.

Die vorliegende Erfindung betrifft die automatisierte Einteilung der in einer CT-Aufnahme dargestellten Herzregion eines Menschen in einzelne Segmente (Segmentierung).

Dabei wurde dem Menschen, der in dieser Beschreibung auch als Patient bezeichnet wird, vorab ein Kontrastmittel intravenös verabreicht, um den Kontrast zwischen den von Kontrastmittel durchflossenen Blutgefäßen und den Ventrikeln in der Herzregion auf der einen Seite und den Knochen und dem übrigen Gewebe auf der anderen Seite zu verstärken.

Kontrastmittel für radiologische (computertomografische) Untersuchungen sind im Stand der Technik beschrieben; ein geeignetes Kontrastmittel ist beispielsweise Iopromid, das beispielsweise unter dem Markennamen Ultravist® vertrieben wird.

Durch ein solches Kontrastmittel wird insbesondere das Innere der Aorta, der Pulmonalarterie und der Ventrikel kontrastverstärkt dargestellt.

In einem ersten Schritt des erfindungsgemäßen Verfahrens wird eine dreidimensionale CT-Aufnahme der Herzregion eines Menschen von dem erfindungsgemäßen Computersystem empfangen. In der CT-Aufnahme sind insbesondere ein rechter Ventrikel, ein linker Ventrikel eine Pulmonalarterie und eine Aorta mittels eines Kontrastmittel kontrastverstärkt dargestellt.

Die CT-Aufnahme kann beispielsweise aus einem Datenspeicher ausgelesen oder von einem Computertomographen übermittelt werden. Denkbar ist ferner, dass das erfindungsgemäße Computersystem ein Bestandteil eines Computertomographen ist oder dass ein Computertomograph ein Bestandteil des erfindungsgemäßen Computersystems ist.

Üblicherweise liegt eine solche CT-Aufnahme in Form einer digitalen dreidimensionalen Grafik vor, die aus einer Vielzahl von Voxeln aufgebaut ist, wobei jedes Voxel ein Volumenelement des Untersuchungsbereichs repräsentiert und jedem Voxel ein Grauwert zugeordnet ist, der die Röntgenabsorption des jeweiligen Volumenelements repräsentiert. Die Röntgenabsorption kann beispielsweise als CT-Wert angegeben werden. Die CT-Zahl oder der CT-Wert wird in Hounsfield-Einheiten (HE) auf der Hounsfield-Skala angegeben. Der CT-Wert lehnt sich an den linearen Schwächungskoeffizienten $\mu$ an, der beschreibt, wie monochromatische Röntgenstrahlung beim Durchdringen von Materie entlang des durchstrahlten Wegs abgeschwächt wird.

Mit dem Schwächungskoeffizienten des betrachteten Gewebes $\mu_T$ und von Wasser $\mu_W$ ist der CT-Wert definiert als

$$\mathrm{CT} := \frac{\mu_T - \mu_W}{\mu_W} \cdot 1000 \, \mathrm{HU}$$

Die Skala ist theoretisch nach oben offen. In der Praxis hat sich der Bereich von -1024 HU bis 3071 HU durchgesetzt; diese 4096 Graustufen können mit einer zwölfstelligen Binärzahl dargestellt werden. Falls eine CT-Aufnahme in anderer Form vorliegt, kann sie in das beschriebene Format überführt werden. Vereinfachend wird in dieser Beschreibung davon ausgegangen, dass CT-Aufnahmen in der beschriebenen Form vorliegen. Diese Annahme soll jedoch in keiner Weise limitierend verstanden werden. Dem Fachmann der Bildverarbeitung ist klar, wie er die Lehre dieser Beschreibung auf CT-Aufnahmen, die in anderen Bildformaten vorliegen und/oder bei denen die Farbwerte anders kodiert sind, übertragen kann. Die vorliegende Erfindung soll daher sämtliche Formate umfassen, in denen CT-Aufnahmen vorliegen können.

In der CT-Aufnahme sind die durch ein Kontrastmittel kontrastverstärkten Bereiche üblicherweise hell dargestellt. Knochen weisen eine höhere Röntgenabsorption als anderes menschliches Gewebe auf und sie sind daher in einer CT-Aufnahme üblicherweise ebenfalls hell dargestellt.

Die CT-Aufnahme wird zunächst bildtechnisch bearbeitet, um die durch das Kontrastmittel kontrastverstärkten Strukturen von dem übrigen Gewebe, insbesondere den Knochen zu separieren. Dazu eignet sich ein Graustufenschwellenwertverfahren. Üblicherweise gibt es bei einem Graustufenschwellenwertverfahren einen oberen Schwellenwert und einen unteren Schwellenwert. Alle Voxel, die einen Grauwert aufweisen, der in dem Bereich zwischen dem oberen Schwellenwerte und dem unteren Schwellenwert liegt, werden auf den Wert 1 (bzw. auf den höchsten vom vorliegenden Format unterstützen Tonwert) gesetzt, während die Grauwerte aller übrigen Voxel auf den Wert 0 gesetzt werden. Denkbar ist natürlich auch die umgekehrte Zuordnung. Denkbar ist auch, dass es nur einen einzigen Schwellenwert gibt, und dass alle Voxel, die einen Grauwert aufweisen, der unterhalb dieses Schwellenwerts liegt, auf den Wert 0 gesetzt werden und die Grauwerte der übrigen Voxel auf den Wert 1 (bzw. auf den höchsten vom vorliegenden Format unterstützen Tonwert) gesetzt werden.

Das Graustufenschwellenwertverfahren wird oftmals auch als Binarisierung bezeichnet, da das Ergebnis ein Binärbild ist, bei dem die Grauwerte der Voxel nur einen von zwei möglichen Werten annehmen. Dabei bedeutet der Wert 0 üblicherweise "schwarz" und der Wert 1 "weiß".

Die Schwellenwerte, bzw. der Schwellenwert, falls nur einer verwendet wird, werden/wird so gewählt, dass durch das Graustufenschwellenwertverfahren ein Binärbild erzeugt wird, auf dem die Herzregion dargestellt ist, umliegendes Gewebe hingegen herausgefiltert ist (Herzregion-Binärbild). Der Schwellenwert oder die Schwellenwerte können empirisch bestimmt werden. Da die Graustufen in CT-Aufnahmen üblicherweise gemäß der Hounsfield-Skale kalibriert sind, lassen sich die ermittelten Schwellenwerte auf CT-Aufnahmen, die von einem anderen Computertomographen erzeugt worden sind, übertragen.

Oftmals verbleiben in dem Binärbild noch Strukturen, die von den Knochen herrühren. Insbesondere die Aorta berührt häufig die Wirbelsäule, so dass Reststrukturen der Wirbelsäule in dem Binärbild verbleiben. Diese Strukturen können mittels eines morphologischen Filters (z.B. mittels Erosion und ggf. anschließender Dilatation) reduziert werden. Solche Filter sind dem Fachmann der Bildverarbeitung bekannt und detailliert in Fachbüchern zum Thema Bildverarbeitung beschrieben (siehe z.B.: J. Ohser: Angewandte Bildverarbeitung und Bildanalyse, Fachbuchverlag Leipzig, 2018, ISBN: 978-3-446-44933-6; A. Erhardt: Einführung in die Digitale Bildverarbeitung, Vieweg + Teubner, 2008, ISBN: 978-3-519-00478-3; P. Soille: Morphologische Bildverarbeitung, Springer 1998, ISBN: 978-3-642-72191-5).

Durch ein Connected-Component-Labeling-Verfahren, das auf das gefilterte Binärbild angewendet werden kann, können alle Voxel markiert werden, die zum Herz oder zu den Blutgefäßen gehören. Connected-Component-Labeling-Verfahren sind ebenfalls in der Literatur ausgiebig beschrieben (siehe z.B.: P. Johansen and S. Olsen: Theory & Applications of Image Analysis, Series in Machine Perception and Artificial Intelligence Vol. 2, World Scientific Publishing, 1992, ISBN: 981-02-0945-2; T.Y. Kong and A. Rosenfeld: Topological Algorithms for Digital Image Processing, Machine Intelligence and Pattern Recognition Vol. 19, Elsevier 1996, ISBN: 0-444-89754-2; I. Pitas: Digital Image Processing Algorithms and Applications, Wiley, 2000, ISBN: 0-471-37739-2).

In einem weiteren Schritt werden aus dem Herzregion-Binärbild zwei weitere Bilder erzeugt: ein Grobstrukturbild und ein Feinstrukturbild. Sowohl das Grobstrukturbild als auch das Feinstrukturbild werden durch Anwendung eines Objekthaftigkeitsfilters auf das Herzregion-Binärbild gewonnen. Im Fall des Grobstrukturbildes wird ein Objekthaftigkeitsgrobfilter auf das Herzregion-Binärbild angewendet; im Fall der Feinstrukturbildes wird ein Objekthaftigkeitsfeinfilter auf das Herzregion-Binärbild angewendet.

Objekthaftigkeitsfilter (engl.: *objectness filter*) sind in der Literatur beschrieben. Vorzugsweise handelt es sich um einen Multiscale-Vessel-Enhancement-Filter, wie er beispielsweise von A.F. Frangi et al. beschrieben wurde (A.F. Frangi et al.: Multiscale Vessel Enhancement Filtering, Medical Image Computing and Computer Assisted Intervention, MICCAI 1998, Lecture Notes in Computer Science, Vol. 1496, Springer Verlag, Berlin, Germany, pp. 130-137). Besonders bevorzugt wird die Implementierung des Multiscale-Vessel-Enhancement-Filters von L. Antiga in dem Insight Segmentation and Registration Toolkit (ITK) verwendet (Luca Antiga, Generalizing vesselness with respect to dimensionality and shape, The Insight Journal, 2007, https://www.insight-journal.org/browse/publication/175). Vorzugsweise wird für den Objekthaftigkeitsfeinfilter eine Breite der Gaußfunktion (Sigma) von 3-5 und für den Objekthaftigkeitsgrobfilter eine Breite der Gaußfunktion (Sigma) von 10-30 verwendet.

Die Anwendung des Objekthaftigkeitsfeinfilters führt dazu, dass die Blutgefäße herausgearbeitet werden (*vessel enhancement*). Aus dem erzeugten Feinstrukturbild werden in einem späteren Verfahrensschritt die Aorta und die Pulmonalarterie extrahiert und voneinander segmentiert.

Die Anwendung des Objekthaftigkeitsgrobfilters führt dazu, dass die Ventrikel und die Übergangsbereiche zu der Aorta und der Pulmonalarterie miteinander zu einer Grobstruktur verschmelzen, während Teile der Aorta und der Pulmonalarterie jenseits dieser Übergangsbereiche herausgefiltert werden.

Die Anwendung eines Multiscale-Vessel-Enhancement-Filters als Grobfilter ist ein neuer Ansatz, der bisher noch nicht in der Literatur beschrieben worden ist. Das erzeugte Grobstrukturbild dient der Identifizierung der Lage und Orientierung des Herzes sowie der Identifizierung der Schnittflächen des Übergangs von Aorta und Pulmonalarterie zu den Ventrikeln, wie nachfolgend beschrieben.

Das Grobstrukturbild zeigt eine grobe Struktur des Herzes zusammen mit Bereichen der Aorta und Pulmonalarterie, die mit dem Herz in Verbindung stehen. Diese Grobstruktur hat eine charakteristische Form, die an einen Schuh erinnert. In einem nachfolgenden Schritt wird diese Grobstruktur in einen Atlas eines Herzes eingepasst (Registrierung). Dieser Schritt, der Bestandteil einer Atlas-basierten Segmentierung ist, dient der Identifizierung der Lage und Orientierung des Herzes, sowie der Schnittflächen des Übergangs von Aorta und Pulmonalarterie zu den Ventrikeln und der anschließenden Segmentierung von Ventrikeln auf der einen Seite und Pulmonalarterie und Aorta auf der anderen Seite.

Der Atlas des Herzes ist eine dreidimensionale Grafik, die ein Herz zeigt, wobei in dieser Grafik die Schnittflächen der Übergänge von Aorta und Pulmonalarterie zu den Ventrikeln bekannt (z.B. markiert) ist. Es kann sich bei diesem Herz-Atlas beispielsweise um ein über eine Mehrzahl von Herz-CT-Aufnahmen gemittelte (z.B. arithmetisch gemittelte) CT-Aufnahme handeln. Die Schnittflächen können beispielsweise von einem Radiologen manuell markiert/eingezeichnet worden sein.

Bei der Einpassung (Registrierung) wird die Grobstruktur des Herzes in dem Grobstrukturbild transformiert (Rotation und/oder Translation), um eine Abbildung der Grobstruktur des Herzes auf den Atlas zu erzielen. Details zur Atlas-basierten Segmentierung sind der Fach- und Patentliteratur zu diesem Thema zu entnehmen (siehe z.B.: S. Suhr: Mathematische Bildregistrierung mit Anwendung in der Atlas-basierten Segmentierung, Bachelorarbeit zur Erlangung des akademischen Grades Bachelor of Science an der Westfälischen Wilhelms-Universität Münster, 2010; M. Schwenke et al.: Atlasbasierte 3D-Segmentierung medizinischer Bilddaten mit Fast-Marching-Methoden, Bildverarbeitung für die Medizin 2009, Springer, ISBN: 978-3-540-93860-6, EP2819093A, WO2014/063746, EP2194505A).

Ist die Transformation gefunden, die zu einer Abbildung der Grobstruktur des Herzes auf den Atlas führt, wird diese Transformation auf das Feinstrukturbild übertragen und es werden die aus dem Atlas bekannten Schnittflächen der Übergänge von Aorta und Pulmonalarterie zu den Ventrikeln auf das Feinstrukturbild übertragen. Schließlich werden die Bereiche in dem Feinstrukturbild, die nicht auf die Aorta und die Pulmonalarterie zurückzuführen sind, aus dem Feinstrukturbild entfernt, so dass nur die Strukturen, die auf die Aorta und die Pulmonalarterie zurückzuführen sind, in dem Bild verbleiben.

In analoger Weise werden die gefundene Transformation und die Schnittflächen auf das Herzregion-Binärbild übertragen. Schließlich werden die Bereiche in dem Herzregion-Binärbild, die nicht auf die Ventrikel zurückzuführen sind, aus dem Herzregion-Bild entfernt, so dass nur die Strukturen, die auf Ventrikel zurückzuführen sind, in dem Bild verbleiben.

Bis zu diesem Punkt wurden die Blutgefäße Aorta und Pulmonalarterie von den Ventrikeln separiert: das Blutgefäß-Binärbild zeigt lediglich die Aorta und die Pulmonalarterie; das Ventrikel-Binärbild zeigt lediglich die Ventrikel.

Das Blutgefäß-Binärbild und/oder das Ventrikel-Binärbild können auf einem Bildschirm angezeigt, auf einem Drucker ausgegeben und/oder in einem Datenspeicher zur weiteren Verwendung gespeichert werden.

In einer bevorzugten Ausführungsform wird das Ventrikel-Binärbild weiter bearbeitet, um den rechten Ventrikel vom linken Ventrikel, sowie Ventrikel vom Atrium zu separieren und/oder es wird das Blutgefäß-Binärbild weiter bearbeitet, um die Aorta von der Pulmonalarterie zu separieren.

Zur Indentifizierung von Aorta und Pulmonalarterie wird vorzugsweise ein Connected-Component-Labeling-Verfahren verwendet. Das Ergebnis können zwei Bilder sein, ein Pulmonalarterie-Binärbild, in der lediglich die Pulmonalarterie dargestellt ist und ein Aorta-Binärbild, in der lediglich die Aorta dargestellt ist. Denkbar ist auch, dass das Ergebnis ein Binärbild ist, das sowohl die Aorta als auch die Pulmonalarterie zeigt, bei dem die Aorta jedoch anders markiert ist als die Pulmonalarterie.

Das Pulmonalarterie-Binärbild und/oder das Aorta-Binärbild und oder das Binärbild, das beide unterschiedlich markierten Blutgefäße zeigt, können auf einem Bildschirm angezeigt, auf einem Drucker ausgegeben und/oder in einem Datenspeicher zur weiteren Verwendung gespeichert werden.

Die Separierung der Ventrikel kann beispielsweise durch ein Atlas-basiertes Segmentierverfahren mit einem Ventrikel-Atlas erfolgen, wobei der Ventrikel-Atlas typische (beispielsweise durch eine arithmetische Mittelung einer Mehrzahl von Ventrikel-Aufnahmen gewonnene) Ventrikel darstellt, wobei das Septum zwischen den Ventrikeln bekannt (z.B. markiert) ist. Das Ergebnis der Separierung sind zwei Bilder, ein Linker-Ventrikel-Binärbild, in dem der linke Ventrikel dargestellt ist und ein Rechter-Ventrikel-Binärbild, in dem der rechte Ventrikel dargestellt ist. Denkbar ist auch, dass das Ergebnis ein Binärbild ist, das sowohl den rechten Ventrikel als auch den linken Ventrikel zeigt, bei dem der rechte Ventrikel jedoch anders markiert ist als der linke Ventrikel. Auch eine Separierung von Ventrikel und Atrium ist auf diese Weise möglich.

Das Rechter-Ventrikel-Binärbild und/oder das Linker-Ventrikel-Binärbild und oder das Binärbild, das beide unterschiedlich markierten Ventrikel zeigt, können auf einem Bildschirm angezeigt, auf einem Drucker ausgegeben und/oder in einem Datenspeicher zur weiteren Verwendung gespeichert werden.

In einem weiteren Schritt können die erzeugten Bilder verwendet werden, um charakteristische Merkmale einer Krankheit bei einem Patienten zu identifizieren. Vorzugsweise handelt es sich bei einer solchen Krankheit um eine pulmonale Hypertonie, besonders bevorzugt um CTEPH.

Ein charakteristisches Merkmal bei Patienten, die an CTEPH erkrankt sind, ist das Verhältnis der Volumina und/oder der Durchmesser von rechtem Ventrikel und linkem Ventrikel (RV/LV-Verhältnis) (siehe z.B. Gonzales G et al. PLoS ONE 10(5): e0127797). Ein Wert von 0,9 und mehr beim RV/LV-Durchmesserverhältnis ist ein Indiz für das Vorliegen von CTEPH.

Ein weiteres charakteristisches Merkmal ist der Grad der Krümmung der Scheidewand zwischen den Herzkammern (siehe z.B. D.A. Moses et al., Quantification of the curvature and shape of the interventricular septum; Magnetic Resonance in Medicine, Vol. 52 (1), 2004, 154-163 sowie F. Haddad et al.: Septal Curvature is a marker of hemodynamic, anatomical, and electromechanical ventricular interdependence in patients with pulmonary arterial hypertension, Echocardiography Vol. 31(6) 2014, 699-707).

Es kann ferner das Verhältnis der Durchmesser der Pulmonalarterie und der Aorta (PA:A-Verhältnis) in der Ebene der Abzweigung der Pulmonalarterie bestimmt werden (siehe z.B. A.S. Iyer et al.: CT scanmeasured pulmonary artery to aorta ratio and echocardiographyfor detecting pulmonary hypertension in severe COPD, CHEST 2014, Vol. 145(4), 824-832). Ein PA:A-Verhältnis von 0,7 und größer ist ein weiteres Indiz für das Vorliegen von CTEPH.

Die Identifizierung der charakteristischen Merkmale kann durch klassische Mustererkennungsverfahren erfolgen. Prinzipiell sind auch Verfahren des maschinellen Lernens denkbar (z.B. künstliche neuronale Netze).

Die vorliegende Erfindung wird ganz oder teilweise mit Hilfe eines Computersystems ausgeführt. Ein "Computersystem" ist ein System zur elektronischen Datenverarbeitung, das mittels programmierbarer Rechenvorschriften Daten verarbeitet. Ein solches System umfasst üblicherweise einen "Computer", diejenige Einheit, die einen Prozessor zur Durchführung logischer Operationen umfasst, sowie eine Peripherie.

Als "Peripherie" bezeichnet man in der Computertechnik alle Geräte, die an den Computer angeschlossen sind, und zur Steuerung des Computers und/oder als Ein- und Ausgabegeräte dienen. Beispiele hierfür sind Monitor (Bildschirm), Drucker, Scanner, Maus, Tastatur, Laufwerke, Kamera, Mikrofon, Lautsprecher etc. Auch interne Anschlüsse und Erweiterungskarten gelten in der Computertechnik als Peripherie.

Computersysteme von heute werden häufig in Desktop-PCs, Portable PCs, Laptops, Notebooks, Netbooks und Tablet-PCs und so genannte Handhelds (z.B. Smartphone) unterteilt; alle diese Systeme können zur Ausführung der Erfindung genutzt werden.

Das erfindungsgemäße Computersystem ist konfiguriert, CT-Aufnahmen der Herzregionen von Patienten automatisiert zu segmentieren.

"Automatisiert" bedeutet, dass keinerlei menschliches Zutun erforderlich ist. Erfindungsgemäß ist also ein Computerprogramm auf einem Computersystem installiert, das Zugriff auf computertomografische Aufnahmen der Herzregion von Patienten hat, und die Aufnahmen automatisiert segmentiert, ohne dass ein Mensch Parameter eingeben oder den Prozess überwachen muss.

Dies setzt voraus, dass die durch das Computerprogramm implementierten Verfahrensschritte so robust sind, dass sie auf eine Vielzahl unterschiedlicher Aufnahmen der Herzregion unterschiedlicher Patienten angewendet werden können und zu einer Segmentierung führen. Es wurde gefunden, dass die hier beschriebenen Verfahrensschritte diese Aufgabe zuverlässig ausüben.

Die Erfindung wird nachstehend anhand von Figuren näher erläutert, ohne die Erfindung auf die in den Figuren gezeigten Merkmale oder Merkmalskombinationen beschränken zu wollen.

Es zeigen:

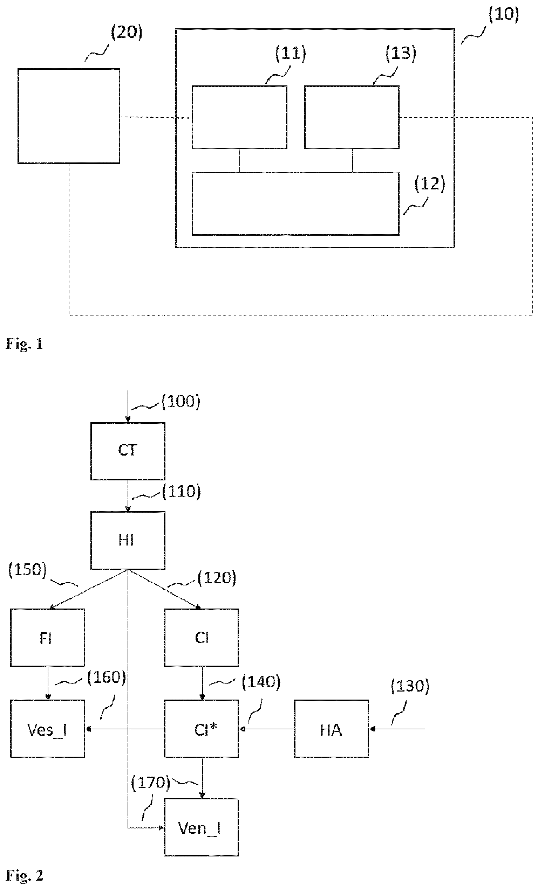

Fig. 1 zeigt schematisch eine Ausführungsform des erfindungsgemäßen Computersystems. Das Computersystem (10) umfasst eine Empfangseinheit (11), eine Steuer- und Recheneinheit (12) und eine Ausgabeeinheit (13).

Über die Empfangseinheit (11) empfängt das Computersystem (10) CT-Aufnahmen der Herzregion von Patienten. Der Begriff "empfangen" soll in dieser Beschreibung auch den Begriff "abrufen oder auslesen" umfassen. Die CT-Aufnahmen können beispielsweise aus einem Datenspeicher (20) ausgelesen werden, der ein Bestandteil des erfindungsgemäßen Computersystems sein kann oder mit diesem über ein Netzwerk (dargestellt durch die gestrichelten Linien) verbunden sein kann.

Von der Empfangseinheit (11) werden die CT-Aufnahmen an die Steuer- und Recheneinheit (12) weitergeleitet, die die automatisierte Segmentierung übernimmt. Die segmentierten Bilder können dann über die Ausgabeeinheit (13) ausgegeben, d.h. auf einem Monitor angezeigt, auf einem Drucker ausgegeben oder in einem Datenspeicher (z.B. dem Datenspeicher (20)) gespeichert werden.

Fig. 2 zeigt schematisch in Form eines Ablaufdiagramms, die Verfahrensschritte, die von einem erfindungsgemäßen Computersystem ausgeführt werden können.

In Schritt (100) wird eine CT-Aufnahme (CT) einer Herzregion eines Menschen empfangen.

In Schritt (110) wird aus der CT-Aufnahme (CT) ein Herzregion-Binärbild (HI) erzeugt, in dem die Ventrikel und die Blutgefäße dargestellt sind.

In Schritt (120) wird aus dem Herzregion-Binärbild (HI) ein Grobstrukturbild (CI) erzeugt. Das Grobstrukturbild (CI) zeigt eine grobe Struktur des Herzes zusammen mit Bereichen der Aorta und Pulmonalarterie, die mit dem Herz in Verbindung stehen.

In Schritt (130) wird ein Atlas (HA) eines Herzes empfangen. Für den Atlas (HA) des Herzes sind die Schnittflächen für die Übergänge der Aorta und der Pulmonalarterie zu den Ventrikeln definiert (z.B. markiert).

In Schritt (140) wird die grobe Struktur des Herzes in dem Grobstrukturbild (CI) in den Atlas eingepasst. Das Ergebnis ist ein transformiertes Grobstrukturbild (CI*).

In Schritt (150) wird aus dem Herzregion-Binärbild (HI) ein Feinstrukturbild (FI) erzeugt, in dem die Aorta und die Pulmonalarterie zusammen mit Strukturen des Herzes dargestellt sind.

In Schritt (160) werden die Transformation des transformierten Grobstrukturbild (CI*) sowie die Schnittflächen aus dem Atlas auf das Feinstrukturbild (FI) übertragen. Ferner werden Strukturen, die von den Ventrikeln herrühren, entfernt. Das Ergebnis ist ein Blutgefäß-Binärbild (Ves_I).

In Schritt (170) werden die Transformation des transformierten Grobstrukturbild (CI*) sowie die Schnittflächen aus dem Atlas auf das Herzregion-Binärbild (HI) übertragen. Ferner werden Strukturen, die von den Blutgefäßen herrühren, entfernt. Das Ergebnis ist ein Ventrikel-Binärbild (Ven_I).

**Patentansprüche**

1. Verfahren umfassend die Schritte:

   - Empfangen einer CT-Aufnahme einer Herzregion eines Menschen, wobei in der CT-Aufnahme ein rechter Ventrikel, ein linker Ventrikel und Blutgefäße umfassend eine Pulmonalarterie und eine Aorta mittels eines Kontrastmittel kontrastverstärkt dargestellt sind,
   - Erzeugen eines Herzregion-Binärbildes aus der empfangenen CT-Aufnahme durch Anwenden eines Graustufenschwellenwertverfahrens,
   - Erzeugen von zwei Bildern aus dem Herzregion-Binärbild, einem Grobstrukturbild durch Anwenden eines Objekthafigkeitsgrobfilters und einem Feinstrukturbild durch Anwenden eines Objekthaftigkeitsfeinfilters,
   - Einpassen des Grobstrukturbildes in einen Atlas eines Herzes, wobei für den Atlas des Herzes Schnittflächen für Übergänge von Aorta und Pulmonalarterie zu den Ventrikeln definiert sind,
   - Übertragen der Schnittflächen auf das Feinstrukturbild, Entfernen von Strukturen, die von den Ventrikeln herrühren und dabei Erzeugen eines Blutgefäß-Binärbildes,
   - Übertragen der Schnittflächen auf das Herzregion-Binärbild, Entfernen von Strukturen, die von den Blutgefäßen herrühren und dabei Erzeugen eines Ventrikel-Binärbildes,
   - Anzeigen des Blutgefäß-Binärbildes und/oder des Ventrikel-Binärbildes auf einem Bildschirm und/oder Ausgeben des Blutgefäß-Binärbildes und/oder des Ventrikel-Binärbildes auf einem Drucker und/oder Speichern des Blutgefäß-Binärbildes und/oder des Ventrikel-Binärbildes in einem Datenspeicher.

2. Verfahren gemäß Anspruch 1, wobei es sich bei dem Objekthaftigkeitsgrobfilter und dem Objekthaftigkeitsfeinfilter um einen Multiscale-Vessel-Enhancement-Filter handelt.

3. Verfahren gemäß einem der Ansprüche 1 oder 2, ferner umfassend die Schritte:

- Identifizieren und Markieren von Aorta und Pulmonalarterie in dem Blutgefäß-Binärbild durch Anwenden eines Connected-Component-Labeling-Verfahrens und dabei Erzeugen eines Pulmonalarterie-Binärbildes, das nur die Pulmonalarterie zeigt und eines Aorta-Binärbildes, das nur die Aorta zeigt und/oder eines Pulmonalarterie-Aorta-Binärbildes, das sowohl die Aorta als auch die Pulmonalarterie zeigt, bei dem die Aorta jedoch anders markiert ist als die Pulmonalarterie,
- Anzeigen des Pulmonalarterie-Binärbildes und/oder des Aorta-Binärbildes und/oder des Pulmonalarterie-Aorta-Binärbildes auf einem Bildschirm und/oder Ausgeben des Pulmonalarterie-Binärbildes und/oder des Aorta-Binärbildes und/oder des Pulmonalarterie-Aorta-Binärbildes auf einem Drucker und/oder Speichern des Pulmonalarterie-Binärbildes und/oder des Aorta-Binärbildes und/oder des Pulmonalarterie-Aorta-Binärbildes in einem Datenspeicher.

4. Verfahren gemäß einem der Ansprüche 1 bis 3, ferner umfassend die Schritte:

- Separieren der Ventrikel in dem Ventrikel-Binärbild durch ein Atlas-basiertes Segmentierverfahren mit einem Ventrikel-Atlas und dabei Erzeugen eines Linker-Ventrikel-Binärbildes, in dem nur der linke Ventrikel dargestellt ist, und eines Rechter-Ventrikel-Binärbildes, in dem nur der rechte Ventrikel dargestellt ist und/oder eines Linker-Ventrikel-Rechter-Ventrikel-Binärbildes, das sowohl den rechten Ventrikel als auch den linken Ventrikel zeigt, bei dem der rechte Ventrikel jedoch anders markiert ist als der linke Ventrikel,
- Anzeigen des Linker-Ventrikel-Binärbildes und/oder des Rechter-Ventrikel-Binärbildes und/oder des Linker-Ventrikel-Rechter-Ventrikel-Binärbildes auf einem Bildschirm und/oder Ausgeben des Linker-Ventrikel-Binärbildes und/oder des Rechter-Ventrikel-Binärbildes und/oder des Linker-Ventrikel-Rechter-Ventrikel-Binärbildes auf einem Drucker und/oder Speichern des Linker-Ventrikel-Binärbildes und/oder des Rechter-Ventrikel-Binärbildes und/oder des Linker-Ventrikel-Rechter-Ventrikel-Binärbildes in einem Datenspeicher.

5. Verfahren gemäß einem der Ansprüche 1 bis 4, ferner umfassend die Schritte:

- Ermitteln des Verhältnisses der Volumina und/oder der Durchmesser von rechtem Ventrikel und linkem Ventrikel mittels des Linker-Ventrikel-Binärbildes und des Rechter-Ventrikel-Binärbildes oder des Linker-Ventrikel-Rechter-Ventrikel-Binärbildes,
- Anzeigen des Verhältnisses auf einem Bildschirm und/oder Ausgeben des Verhältnisses auf einem Drucker und/oder Speichern des Verhältnisses in einem Datenspeicher.

6. Verfahren gemäß einem der Ansprüche 1 bis 5, ferner umfassend die Schritte:

- Ermitteln des Krümmungsgrades der Scheidewand zwischen dem linken Ventrikel und dem rechten Ventrikel mittels des Linker-Ventrikel-Rechter-Ventrikel-Binärbildes,
- Anzeigen des Krümmungsgrades auf einem Bildschirm und/oder Ausgeben des Krümmungsgrades auf einem Drucker und/oder Speichern des Krümmungsgrades in einem Datenspeicher.

7. Verfahren gemäß einem der Ansprüche 1 bis 6, ferner umfassend die Schritte:

- Ermitteln des Verhältnisses der Durchmesser der Pulmonalarterie und der Aorta in der Ebene der Abzweigung der Pulmonalarterie mittels des Pulmonalarterie-Binärbildes und des Aorta-Binärbildes oder des Pulmonalarterie-Aorta-Binärbildes,
- Anzeigen des Verhältnisses auf einem Bildschirm und/oder Ausgeben des Verhältnisses auf einem Drucker und/oder Speichern des Verhältnisses in einem Datenspeicher.

8. Computersystem umfassend

• eine Empfangseinheit
• eine Steuer- und Recheneinheit, und
• eine Ausgabeeinheit

- wobei die Steuer- und Recheneinheit konfiguriert ist, die Empfangseinheit zu veranlassen, eine CT-Aufnahme einer Herzregion eines Menschen zu empfangen, wobei in der CT-Aufnahme ein rechter Ventrikel, ein linker Ventrikel und Blutgefäße umfassend eine Pulmonalarterie und eine Aorta mittels eines Kontrastmittel kontrastverstärkt dargestellt sind,

- wobei die Steuer- und Recheneinheit konfiguriert ist, aus der empfangenen CT-Aufnahme durch Anwenden eines Graustufenschwellenwertverfahrens ein Herzregion-Binärbild zu erzeugen,

- wobei die Steuer- und Recheneinheit konfiguriert ist, aus dem Herzregion-Binärbild zwei Bilder zu erzeugen, ein Grobstrukturbild durch Anwenden eines Objekthaftigkeitsgrobfilters und ein Feinstrukturbild durch Anwenden eines Objekthaftigkeitsfeinfilters,

- wobei die Steuer- und Recheneinheit konfiguriert ist, das Grobstrukturbild in einen Atlas eines Herzes einzupassen, wobei für den Atlas des Herzes Schnittflächen für Übergänge von Aorta und Pulmonalarterie zu den Ventrikeln definiert sind,

- wobei die Steuer- und Recheneinheit konfiguriert ist, ein Blutgefäß-Binärbild dadurch zu erzeugen, dass die Schnittflächen auf das Feinstrukturbild übertragen werden und Strukturen in dem Feinstrukturbild entfernt werden, die von den Ventrikeln herrühren,

- wobei die Steuer- und Recheneinheit konfiguriert ist, ein Ventrikel-Binärbild dadurch zu erzeugen, dass die Schnittflächen auf das Herzregion-Binärbild übertragen werden und Strukturen in dem Herzregion-Binärbild entfernt werden, die von den Blutgefäßen herrühren,

- wobei die Steuer- und Recheneinheit konfiguriert ist, das Blutgefäß-Binärbild und/oder das Ventrikel-Binärbild auf einem Bildschirm anzuzeigen, auf einem Drucker auszugeben und/oder in einem Datenspeicher zu speichern.

9. Computerprogrammprodukt umfassend einen Datenträger, auf dem ein Computerprogramm gespeichert ist, das in den Arbeitsspeicher eines Computersystems geladen werden kann und dort das Computersystem dazu veranlasst, folgende Schritte auszuführen:

- Empfangen einer CT-Aufnahme einer Herzregion eines Menschen, wobei in der CT-Aufnahme ein rechter Ventrikel, ein linker Ventrikel und Blutgefäße umfassend eine Pulmonalarterie und eine Aorta mittels eines Kontrastmittel kontrastverstärkt dargestellt sind,

- Erzeugen eines Herzregion-Binärbildes aus der empfangenen CT-Aufnahme durch Anwenden eines Graustufenschwellenwertverfahrens,

- Erzeugen eines Grobstrukturbildes aus dem Herzregion-Binärbild durch Anwenden eines Objekthaftigkeitsgrobfilters,

- Erzeugen eines Feinstrukturbildes aus dem Herzregion-Binärbild durch Anwenden eines Objekthaftigkeitsfeinfilters,

- Einpassen des Grobstrukturbildes in einen Atlas eines Herzes, wobei für den Atlas des Herzes Schnittflächen für Übergänge von Aorta und Pulmonalarterie zu den Ventrikeln definiert sind,

- Erzeugen eines Blutgefäß-Binärbildes aus dem Feinstrukturbild durch Übertragen der Schnittflächen auf das Feinstrukturbild und Entfernen von Strukturen aus dem Feinstrukturbild, die von den Ventrikeln herrühren,

- Erzeugen eines Ventrikel-Binärbildes aus dem Herzregion-Binärbild durch Übertragen der Schnittflächen auf das Herzregion-Binärbild und Entfernen von Strukturen aus dem Herzregion-Binärbild, die von den Blutgefäßen herrühren,

- Anzeigen des Blutgefäß-Binärbildes und/oder des Ventrikel-Binärbildes auf einem Bildschirm und/oder Ausgeben des Blutgefäß-Binärbildes und/oder des Ventrikel-Binärbildes auf einem Drucker und/oder Speichern des Blutgefäß-Binärbildes und/oder des Ventrikel-Binärbildes in einem Datenspeicher.

10. Computerprogrammprodukt gemäß Anspruch 9, wobei das Computerprogramm das Computersystem dazu veranlasst einen oder mehrere der Schritte eines der Ansprüche 1 bis 7 auszuführen.

**Fig. 1**

**Fig. 2**

**Europäisches Patentamt**
**European Patent Office**
**Office européen des brevets**

## EUROPÄISCHER RECHERCHENBERICHT

Nummer der Anmeldung

EP 20 20 2165

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | KHEDMATI ABOLFAZL ET AL: "Semi-automatic detection of coronary artery stenosis in 3D CTA", IET IMAGE PROCESSING, IET, UK, Bd. 10, Nr. 10, 1. Oktober 2016 (2016-10-01), Seiten 724-732, XP006058576, ISSN: 1751-9659, DOI: 10.1049/IET-IPR.2015.0687 * Zusammenfassung * * Abschnitte 3.1, 3.2, 3.3 * * Abbildungen 1, 2, 3, 6 * ----- | 1-10 | INV. G06T7/11 G06T7/136 G06T7/155 G06T7/187 |
| A | FRANGI A F ET AL: "Multiscale vessel enhancement filtering", ELECTRONIC PUBLISHING, ARTISTIC IMAGING, AND DIGITAL TYPOGRAPHY; [LECTURE NOTES IN COMPUTER SCIENCE , ISSN 0302-9743], SPRINGER VERLAG, DE, Bd. 1496, 1. Januar 1998 (1998-01-01), Seiten 130-137, XP002345875, DOI: 10.1007/BFB0056195 ISBN: 978-3-540-24128-7 * Zusammenfassung * * Abschnitt 1 * * Abschnitt 2, erster Absatz * ----- | 1-10 | |
| | | | RECHERCHIERTE SACHGEBIETE (IPC) |
| | | | G06T |
| A | WO 2018/202541 A1 (BAYER AG [DE]) 8. November 2018 (2018-11-08) * Zusammenfassung * * Seite 6, Zeile 21 - Seite 7, Zeile 30 * ----- | 5-7 | |

Der vorliegende Recherchenbericht wurde für alle Patentansprüche erstellt

| Recherchenort | Abschlußdatum der Recherche | Prüfer |
|---|---|---|
| München | 19. November 2020 | Engels, Angela |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 20 2165

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-11-2020

| Im Recherchenbericht angeführtes Patentdokument | Datum der Veröffentlichung | Mitglied(er) der Patentfamilie | Datum der Veröffentlichung |
|---|---|---|---|
| WO 2018202541 A1 | 08-11-2018 | CA 3061988 A1 | 30-10-2019 |
| | | CN 110574070 A | 13-12-2019 |
| | | EP 3619631 A1 | 11-03-2020 |
| | | JP 2020518396 A | 25-06-2020 |
| | | US 2020237331 A1 | 30-07-2020 |
| | | WO 2018202541 A1 | 08-11-2018 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2819093 A
- WO 2014063746 A
- EP 2194505 A

**In der Beschreibung aufgeführte Nicht-Patentliteratur**

- **J. OHSER.** Angewandte Bildverarbeitung und Bildanalyse. Fachbuchverlag Leipzig, 2018
- **A. ERHARDT.** Einführung in die Digitale Bildverarbeitung. Vieweg + Teubner, 2008
- **P. SOILLE.** Morphologische Bildverarbeitung. Springer, 1998
- **P. JOHANSEN ; S. OLSEN.** Theory & Applications of Image Analysis, Series in Machine Perception and Artificial Intelligence. World Scientific Publishing, 1992, vol. 2
- **T.Y. KONG ; A. ROSENFELD.** Topological Algorithms for Digital Image Processing, Machine Intelligence and Pattern Recognition. Elsevier, 1996, vol. 19
- **I. PITAS.** Digital Image Processing Algorithms and Applications. Wiley, 2000
- Multiscale Vessel Enhancement Filtering. **A.F. FRANGI et al.** Medical Image Computing and Computer Assisted Intervention, MICCAI 1998, Lecture Notes in Computer Science. Springer Verlag, 1998, vol. 1496, 130-137
- **LUCA ANTIGA.** Generalizing vesselness with respect to dimensionality and shape. *The Insight Journal,* 2007, https://www.insight-journal.org/browse/publication/175
- **S. SUHR.** Mathematische Bildregistrierung mit Anwendung in der Atlas-basierten Segmentierung. *Bachelorarbeit zur Erlangung des akademischen Grades Bachelor of Science an der Westfälischen Wilhelms-Universität Münster,* 2010
- **M. SCHWENKE et al.** Atlasbasierte 3D-Segmentierung medizinischer Bilddaten mit Fast-Marching-Methoden, Bildverarbeitung für die Medizin. Springer, 2009
- **GONZALES G et al.** *PLoS ONE,* vol. 10 (5), e0127797
- **D.A. MOSES et al.** Quantification of the curvature and shape of the interventricular septum. *Magnetic Resonance in Medicine,* 2004, vol. 52 (1), 154-163
- **F. HADDAD et al.** Septal Curvature is a marker of hemodynamic, anatomical, and electromechanical ventricular interdependence in patients with pulmonary arterial hypertension. *Echocardiography,* 2014, vol. 31 (6), 699-707
- **A.S. IYER et al.** CT scanmeasured pulmonary artery to aorta ratio and echocardiographyfor detecting pulmonary hypertension in severe COPD. *CHEST,* 2014, vol. 145 (4), 824-832